# FASCICULE DE BREVET EUROPEEN

(11) **EP 0 923 679 B1**
(45) Date de publication et mention de la délivrance du brevet: **02.10.2002**
(21) Numéro de dépôt: 98932228.4
(22) Date de dépôt: 17.06.1998
(51) Int. Cl.: F16D 13/75

(54) **EMBRAYAGE A FRICTION A DISPOSITIF DE RATTRAPAGE D'USURE, EN PARTICULIER POUR VEHICULE AUTOMOBILE**
REIBUNGSKUPPLUNG FÜR KRAFTFAHRZEUGE MIT VERSCHLEISS-NACHSTELLEINRICHTUNG
FRICTION CLUTCH WITH WEAR TAKE-UP DEVICE, IN PARTICULAR FOR MOTOR VEHICLE

(30) Priorité: 17.06.1997 FR 9707482
(43) Date de publication de la demande: 23.06.1999
(73) Titulaire: VALEO, 75017 Paris (FR)
(72) Inventeur: DOREMUS, Olivier, F-62690 Izel les Hameau (FR); TRAVERS, Jean-Luc, F-80700 Andechy (FR)
(74) Mandataire: Gamonal, Didier
(86) Numéro de dépôt international: FR9801277
(87) Numéro de publication internationale: WO98058187

(56) Documents cités:
- FR-A- 2 739 159

## Description

La présente invention concerne un embrayage à friction, en particulier pour véhicule automobile, et se rapporte plus particulièrement à un embrayage équipé d'un dispositif de compensation de l'usure due notamment à l'usure des garnitures de friction, ledit dispositif, dit ci-après dispositif de rattrapage d'usure, opérant au fur et à mesure de l'usure desdites garnitures.

Un embrayage à friction classique comporte généralement un plateau de réaction, éventuellement en deux parties pour formation d'un volant amortisseur, calé en rotation sur un premier arbre, usuellement un arbre menant tel que le vilebrequin du moteur à combustion interne, et supportant par sa périphérie externe un couvercle auquel est attaché au moins un plateau de pression.

Le plateau de pression est solidaire en rotation du couvercle et du plateau de réaction tout en pouvant se déplacer axialement sous la sollicitation de moyens élastiques à action axiale commandés, généralement un diaphragme métallique prenant appui sur le couvercle, tandis qu'un disque de friction, portant des garnitures de friction à sa périphérie externe, solidaire en rotation d'un arbre, usuellement un arbre mené tel que l'arbre d'entrée de la boîte de vitesses, est intercalé entre le.plateau de pression et le plateau de réaction de façon à être serré entre eux lorsque l'embrayage est en position d'engagement. Le diaphragme commande le déplacement axial du plateau de pression lorsqu'il est actionné par une butée de débrayage.

Au cours de la durée de vie d'un tel embrayage, les garnitures de friction ainsi que les contre-matériaux, plateau de pression et plateau de réaction, s'usent, ce qui provoque une variation de la position du plateau de pression et celles des moyens élastiques à action axiale et de la butée de débrayage, d'où il s'ensuit une variation de la force de serrage entre le disque de friction, d'une part, et les plateaux de pression et de réaction, d'autre part, en raison des modifications des conditions de travail du diaphragme, et la force nécessaire pour débrayer s'en trouve affectée. En dotant un tel embrayage d'un dispositif de rattrapage d'usure, on évite ces inconvénients, le diaphragme, ainsi que la butée de débrayage, usuellement en appui constant sur le diaphragme, occupant la même position lorsque l'embrayage est en position d'engagement.

On a proposé, notamment dans la demande de brevet français FR-A-2 753 503 déposée le 17 septembre 1996 sous le numéro 96-11297, un embrayage à friction, en particulier pour véhicule automobile, du genre comportant un plateau de réaction destiné à être calé en rotation sur un arbre menant, un disque de friction, portant à sa périphérie externe des garnitures de friction, destiné à être calé en rotation sur un arbre mené, un plateau de pression, un couvercle fixé sur le plateau de réaction, des moyens élastiques à action axiale agissant entre, d'une part, le couvercle et, d'autre part, le plateau de pression par l'intermédiaire de moyens d'appui, le plateau de pression étant solidaire en rotation du couvercle tout en pouvant se déplacer axialement par rapport à lui et étant soumis à l'action de moyens élastiques de rappel rappelant le plateau de pression axialement vers le couvercle, ledit embrayage comportant également un dispositif de rattrapage d'usure comprenant des moyens à rampes disposées circonférentiellement, placés axialement entre les moyens d'appui et le plateau de pression, lesdites rampes étant adaptées à coopérer avec des moyens de contre-rampes, ledit dispositif de rattrapage d'usure comprenant également une denture avec laquelle coopère une vis sans fin disposée tangentiellement, l'un des deux organes moyens à rampes et moyens de contre-rampes étant solidaire de ladite denture, des moyens d'entraînement en rotation de la vis sans fin étant prévus, rendus opérationnels par l'usure des garnitures de friction lorsque l'embrayage est embrayé, la vis sans fin et les moyens d'entraînement en rotation de la vis sans fin étant portés par un support.

Selon ladite demande de brevet français, un embrayage du genre ci-dessus comprend des moyens à rampes adaptés à être entraînés à rotation grâce à la denture qu'ils portent à leur périphérie, tandis que la vis sans fin et les moyens d'entraînement en rotation de la vis sans fin sont portés par le support ici solidaire du couvercle.

Une telle disposition fonctionne bien ; toutefois, elle nécessite un couvercle bien adapté ; par ailleurs, les moyens élastiques à action axiale sont constitués par un diaphragme qui commande les moyens d'entraînement en rotation de la vis sans fin et qui est spécifique.

La présente invention a pour but de pallier ces inconvénients et pour objet un embrayage du genre ci-dessus dans lequel le couvercle est très peu modifié par rapport au couvercle d'un embrayage non équipé d'un dispositif de rattrapage d'usure ; par ailleurs, lorsque les moyens élastiques à action axiale sont constitués par un diaphragme, celui-ci est un diaphragme classique, même lorsque les moyens d'entraînement en rotation de la vis sans fin sont commandés par le diaphragme ; de plus, le nombre de pièces est réduit.

Selon l'invention, un embrayage du genre ci-dessus est caractérisé par le fait que le support qui porte la vis sans fin et les moyens d'entraînement en rotation de la vis sans fin est solidaire des moyens à rampes.

De préférence, les moyens élastiques à action axiale sont constitués par un diaphragme.

Avantageusement, les moyens à rampes sont constitués d'un anneau présentant axialement, d'un côté, des rampes inclinées et réparties circonférentiellement et, de l'autre côté, les moyens d'appui.

De préférence, les moyens de contre-rampes consistent en des plots ou des rampes destinés à coopérer avec les rampes des moyens à rampes.

Avantageusement, les moyens à rampes sont centrés par rapport au plateau de pression.

De préférence, la vis sans fin est montée déplaçable selon son axe en étant soumise à l'action d'un moyen élastique dit de rattrapage.

Entre deux opérations de rattrapage, la charge du moyen élastique de rattrapage est amenée à croître avec l'usure des garnitures de friction ; dès lors, ledit déplacement axial est obtenu par action du moyen élastique de rattrapage lorsque sa charge est suffisamment élevée pour surmonter l'effort de frottement dû à l'effort axial provenant des moyens élastiques de rappel auxquels sont soumis lesdits moyens à rampes, l'embrayage étant débrayé.

Avantageusement, la course du plateau de pression est limitée dans le sens du débrayage pour libérer les moyens à rampes de l'effort axial provenant des moyens élastiques de rappel.

De préférence, le moyen élastique de rattrapage est un ressort hélicoïdal entourant un axe qui porte la vis sans fin.

Avantageusement, les moyens d'entraînement en rotation de la vis sans fin sont constitués par une roue à rochet solidaire en rotation de la vis sans fin.

De préférence, l'axe portant la vis sans fin et le ressort hélicoïdal est supporté par le support.

Avantageusement, les moyens d'entraînement en rotation, de la vis sans fin, sont commandés par l'intermédiaire d'une languette de commande.

Avantageusement, la course de la languette de commande, relativement à la roue à rochet, lors de l'opération de débrayage, est limitée par une butée dite de contrôle.

De préférence, la vis sans fin et la roue à rochet sont taillées dans une même pièce.

De préférence, les dents de la roue à rochet sont réalisées en sorte que, lors d'une course de débrayage minimum définie par construction, et abstraction faite de la butée de contrôle, l'extrémité de la languette de commande saute une dent.

Avantageusement, la butée de contrôle est disposée en sorte que, lors de la course de débrayage garnitures neuves, l'extrémité de la languette de commande ne saute pas une dent, ou est à la limite de sauter une dent.

Avantageusement, si l'usure a été suffisante pour que la roue à rochet ait suffisamment tourné de sorte qu'au retour la languette de commande a sauté une dent, la languette de commande fait tourner, lors de l'opération d'embrayage, la roue à rochet.

De préférence, les moyens de contre-rampes et la denture sont solidaires du plateau de pression, les moyens à rampes étant libres en rotation.

Avantageusement, le support, portant la vis sans fin et les moyens d'entraînement en rotation de la vis sans fin, est fixé aux moyens à rampes radialement en dessous de ceux-ci, c'est-à-dire à l'intérieur des moyens à rampes.

Avantageusement, la denture est placée radialement en dessous de la vis sans fin avec laquelle elle coopère.

De préférence, la languette de commande est portée par le support.

Avantageusement, les moyens d'entraînement en rotation de la vis sans fin sont commandés par le diaphragme.

De préférence, le support équipé de la vis sans fin, de la roue à rochet, de la languette de commande, du ressort et de l'axe constitue un sous-ensemble prêt à être installé ; lors de son installation, un réglage axial est possible grâce à des trous oblongs que présente le support.

Avantageusement, l'embrayage est du type tiré.

De préférence, les moyens à rampes sont solidaires en rotation du plateau de pression tout en pouvant se déplacer axialement par rapport à lui, tandis que les moyens de contre-rampes sont réalisés sous forme d'un anneau monté libre en rotation par rapport au plateau de pression et disposé axialement entre celui-ci et les moyens à rampes.

De préférence, la denture est portée par les moyens de contre-rampes.

Avantageusement, le support, portant la vis sans fin et les moyens d'entraînement en rotation de la vis sans fin, est fixé aux moyens à rampes radialement au dessus de ceux-ci, c'est-à-dire à l'extérieur des moyens à rampes.

De préférence, la denture est placée radialement au dessus des moyens de contre-rampes.

Avantageusement, la languette de commande est portée par le couvercle

De préférence, le support équipé de la vis sans fin, de la roue à rochet, du ressort et de l'axe constitue un sous-ensemble prêt à être installé.

Avantageusement, l'embrayage est du type poussé, le diaphragme étant solidarisé au couvercle par des colonnettes.

Pour mieux faire comprendre l'objet de l'invention, on va décrire maintenant, à titre d'exemples, purement illustratifs et non limitatifs, des modes de réalisation représentés sur les dessins annexés dans lesquels :
- la figure 1 est une vue partielle de dessus, avec arrachements, d'un embrayage équipé d'un dispositif de rattrapage d'usure selon l'invention , garnitures neuves ;
- la figure 2 est une vue partielle en coupe de l'embrayage, selon II-II de la figure 1 ;
- la figure 3 est une vue analogue à la figure 2, l'embrayage étant débrayé ;
- les figures 4 et 5 sont des vues. analogues aux figures 2 et 3, respectivement, après usure des garnitures ;
- la figure 6 est une vue partielle selon la flèche VI de' la figure 1 ;
- la figure 7 est une vue partielle de la figure 1 montrant l'embrayage dans la condition où le dispositif de rattrapage d'usure n'est plus opérationnel, une certaine quantité d'usure ayant été rattrapée ;
- les figures 8 à 10 représentent le sous-ensemble constitué du support, de la vis sans fin, de la roue à rochet, du ressort, de l'axe et de l'organe élastique : la figure 8 est une vue selon la flèche VIII de la figure 10 qui est une vue en coupe selon X-X de la figure 8 ; la figure 9 est une vue en coupe selon IX-IX de la figure 8 ;
- la figure 11 est une vue analogue à la figure 1 montrant un embrayage équipé d'une variante de dispositif de rattrapage d'usure selon l'invention ;
- la figure 12 est une vue agrandie de la loupe XII de la figure 11 ;
- la figure 13 est une vue en coupe selon XIII-XIII de la figure 11 ;
- la figure 14 est une vue en coupe selon XIV-XIV de la figure 11.

Dans ces figures, l'embrayage à diaphragme 3, 53 comporte un couvercle 2, 52, de forme creuse.

Ici, le couvercle est métallique en étant en tôle emboutie.

Ce couvercle comporte un fond et des moyens pour sa fixation à un plateau de réaction, éventuellement divisé pour formation d'un volant amortisseur. Le plateau de réaction est ici un plateau de réaction menant.

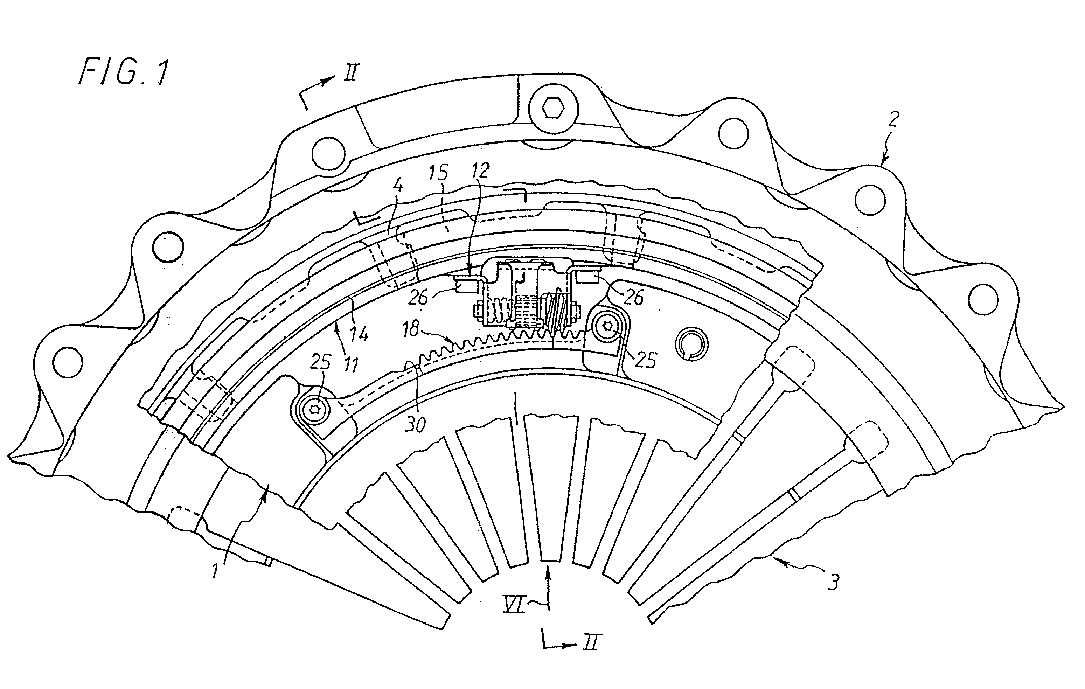

Dans les modes de réalisation des figures 1 à 14, les moyens de fixation du couvercle consistent en une jupe annulaire d'orientation axiale fractionnée prolongeant un rebord radial doté de trous pour passage des organes de fixation, tels que des vis, du couvercle 2 au plateau de réaction.

En variante, le couvercle est globalement en forme d'assiette creuse et comporte à sa périphérie externe un rebord radial formant des moyens de fixation du couvercle au plateau de réaction, ledit rebord étant doté de trous pour passage d'organes de fixation, tels que des vis, du couvercle au plateau de réaction.

Dans les modes de réalisation des figures 1 à 10, l'embrayage est du type tiré en sorte qu'il faut agir en traction sur l'extrémité interne des doigts du diaphragme 3 pour désengager (débrayer) l'embrayage. La partie périphérique externe de la rondelle Belleville du diaphragme prend appui sur le fond du couvercle sur un jonc non référencé porté par la périphérie externe du fond du couvercle, en variante sur un embouti ménagé dans ledit fond. La partie périphérique interne de cette rondelle Belleville est en contact avec un appui 14 décrit ci-après.

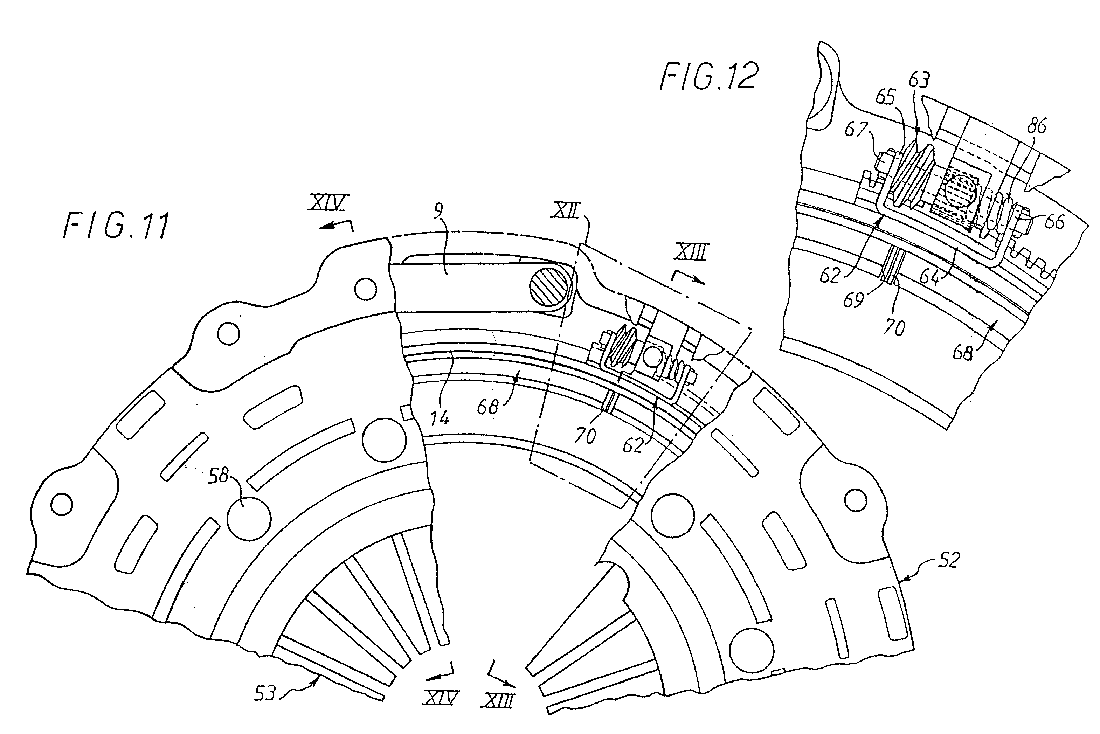

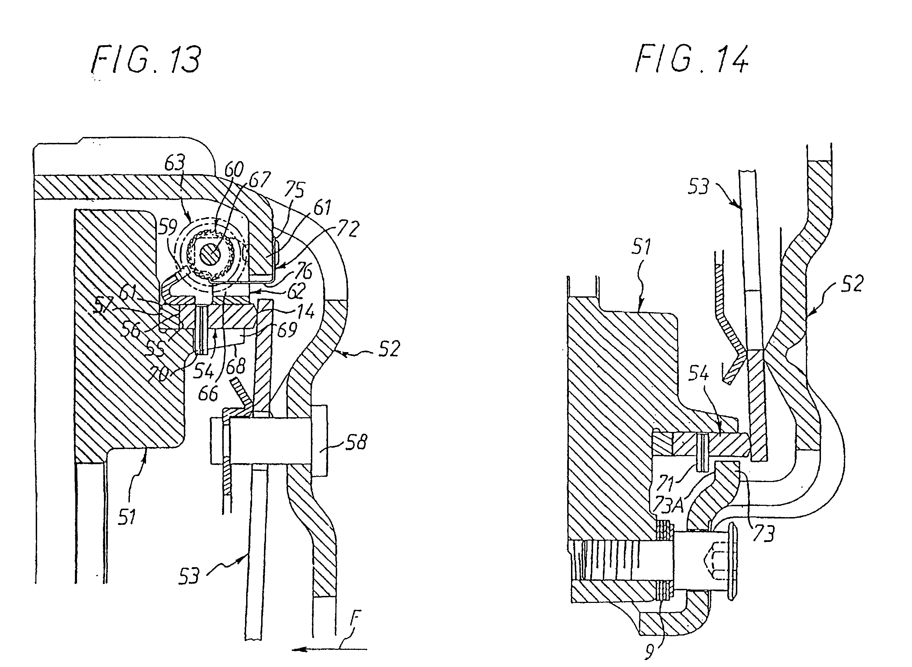

Dans le mode de réalisation des figures 11 à 14, l'embrayage est du type poussé, c'est-à-dire qu'il faut, à l'aide d'une butée de débrayage, non représentée, agir en poussant sur l'extrémité interne des doigts du diaphragme 53 pour désengager (débrayer) l'embrayage. Pour ce faire, le fond du couvercle 52 porte, d'une part, un appui primaire consistant par exemple en un embouti réalisé dans le fond du couvercle à la périphérie interne de celui-ci, et, d'autre part, en regard de l'appui primaire, un appui secondaire sous forme de têtes de colonnettes, de couronne roulée portée par des colonnettes 58 (figures 11 et 13), ou tout autre moyen. Le diaphragme 53, par la périphérie interne de sa rondelle Belleville, est monté de manière basculante entre lesdits appuis primaire et secondaire. Par la périphérie externe de sa rondelle Belleville, il est en contact avec des zones d'appui 54, décrites ci-après.

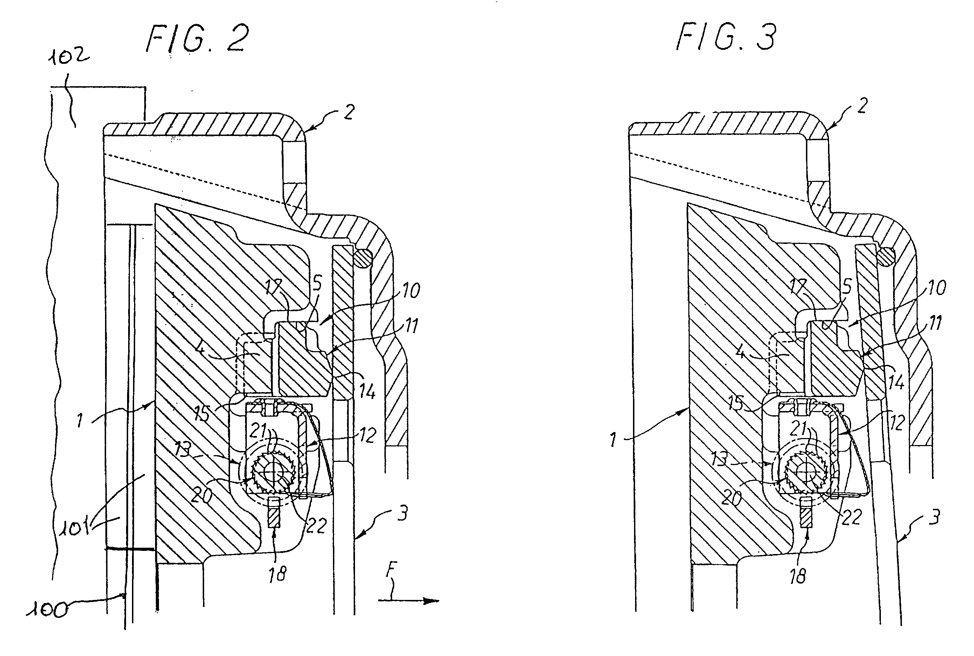

En se reportant aux figures 1 à 10, on voit un mécanisme d'embrayage à friction, notamment pour véhicule automobile, qui comprend un plateau de pression 1 destiné à coopérer avec un disque de friction représenté schématiquement en 100 à la figure 2, portant à sa périphérie externe des garnitures de friction 101, qui coopère lui-même avec un plateau de réaction 102. Le plateau de réaction, est destiné à être calé en rotation sur un arbre menant, tel que le vilebrequin du moteur à combustion interne. Le disque de friction est solidaire en rotation d'un arbre mené tel que l'arbre d'entrée de la boîte de vitesses. Le disque de friction est ici un disque de friction mené.

Le plateau de pression 1 est solidaire en rotation d'un couvercle 2 de forme creuse par l'intermédiaire de languettes tangentielles non visibles sur les figures qui, élastiques, constituent en même temps des moyens de rappel du plateau de pression 1 vers le couvercle 2, ici métallique en tôle emboutie.

Le plateau de pression 1, tout en étant solidaire en rotation du couvercle 2, est donc déplaçable axialement par rapport au couvercle 2 sous la sollicitation de moyens élastiques à action axiale commandés, ici un diaphragme 3 prenant appui sur le couvercle 2 par sa périphérie externe, l'embrayage étant ici du type tiré, l'opération de débrayage étant effectuée en agissant sur l'extrémité des doigts du diaphragme 3 dans le sens de la flèche F de la figure 2.

Pour maintenir, lorsque l'embrayage est embrayé, les moyens élastiques à action axiale 3 dans une position indépendante de l'usure des garnitures du disque de friction et des plateaux de pression 1 et de réaction dont les faces, dites de friction, s'usent au contact des garnitures du disque, il est prévu un dispositif de rattrapage d'usure 10.

Le dispositif de rattrapage d'usure 10 comprend des moyens à rampes 11 disposées circonférentiellement ; plus précisément, ces moyens à rampes 11 sont constitués d'un anneau présentant des rampes 15 disposées circonférentiellement ; ledit anneau présente également des zones d'appui 14 constituées par une arête supérieure centrée sur l'axe de l'embrayage placée axialement à l'extérieur par rapport aux rampes 15.

Le plateau de pression 1 présente, ici venus de moulage, sur sa face tournée vers le fond du couvercle 2, des plots 4 répartis circonférentiellement à une distance l'un de l'autre qui correspond à celle qui sépare circonférentiellement deux rampes 15 successives, les plots 4 étant destinés à coopérer chacun avec une rampe 15.

Les moyens à rampes il sont placés axialement entre le diaphragme 3 et le plateau de pression 1 en sorte que les plots 4 reçoivent les rampes 15 et le diaphragme 3 coopère avec les zones d'appui 14 qui constituent ainsi les moyens d'appui par l'intermédiaire desquels le diaphragme 3 agit sur le plateau de pression 1.

Les moyens à rampes 11 présentent, à leur périphérie externe, une paroi cylindrique 17 parallèle à l'axe de l'embrayage coopérant avec une creusure cylindrique 17 de même axe que présente le plateau de pression sur sa face en regard du fond du couvercle 2 en sorte que les moyens à rampes 11 sont centrés par rapport au plateau de pression 1.

Le dispositif de rattrapage d'usure 10 comprend par ailleurs une roue à rochet 20 à dents inclinées 21 portée par un axe 22 qui porte également une vis sans fin 13.

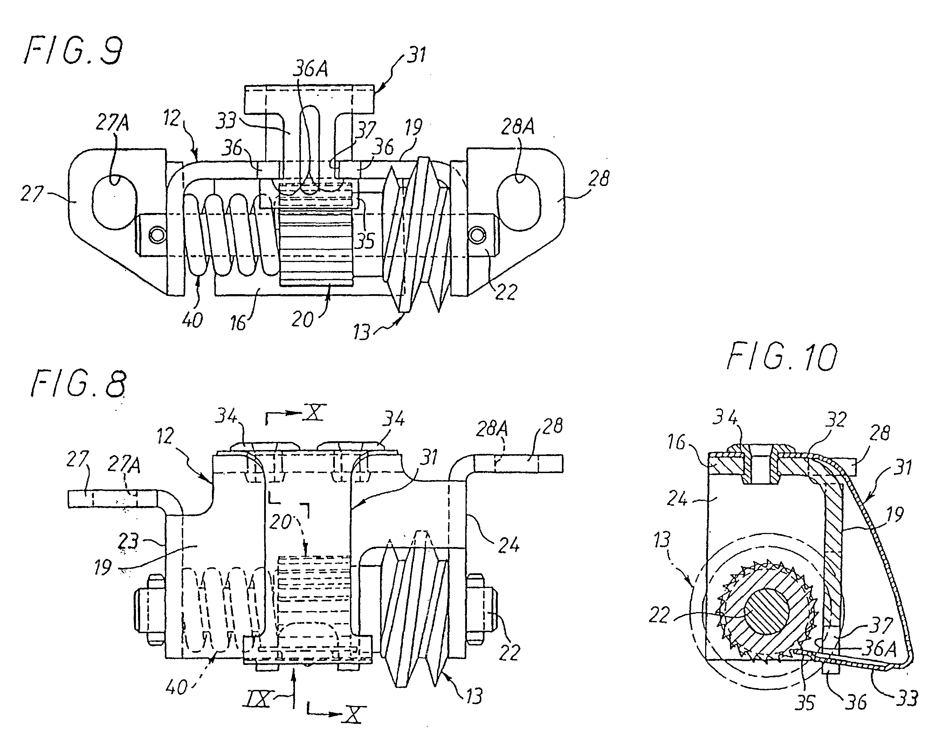

L'axe 22 de la roue à rochet 20 est porté par un support 12, mieux visible sur les figures 8 à 10, en tôle découpée et pliée, en forme de U ayant une âme 19 et deux ailes 23, 24 destinées à supporter l'axe 22 ; à cet effet, chacune des ailes porte un trou circulaire adapté au diamètre de l'axe 22.

Les ailes 23, 24 du support 12 se prolongent selon des bras 27, 28 en forme de L s'étendant en éloignement l'un de l'autre perpendiculairement à l'âme 19.

Le support 12 est adapté à recevoir un organe élastique 31, ici métallique, en forme générale de C dont une extrémité 32 est utilisée pour la fixation, ici par des rivets 34, de l'organe élastique 31 sur un retour 16 de l'âme 19 du support 12, ce retour 16. s'étendant ici perpendiculairement à l'âme 19 et dans l'alignement du bras 28. L'autre extrémité 33, en forme de T, de l'organe élastique 31 porte en bout une languette de commande 35.

Lorsque l'organe élastique 31 et la roue à rochet 20 sont montés sur le support 12, la languette de commande 35 coopère avec un pied de dent de la roue à rochet 20 ; un ressort hélicoïdal 40 de compression est placé entre la roue à rochet 20 et l'aile 23 du support 12, en étant enroulé autour de l'axe 22 ; la vis sans fin 13 et la roue à rocket 20 sont ici taillées dans une même pièce ; comme on le voit, le support 12 équipé de cette même pièce, de l'organe élastique 31, du ressort 40 et de l'axe 22 constitue un sous-ensemble prêt à être installé.

Le ressort hélicoïdal 40 constitue le moyen élastique de rattrapage, comme décrit ci-dessous.

Le filet et le pas de la vis sans fin 13 sont adaptés à une denture 18 ; la vis sans fin 13 est amenée à coopérer avec la denture 18 dans les conditions qui seront décrites ci-après.

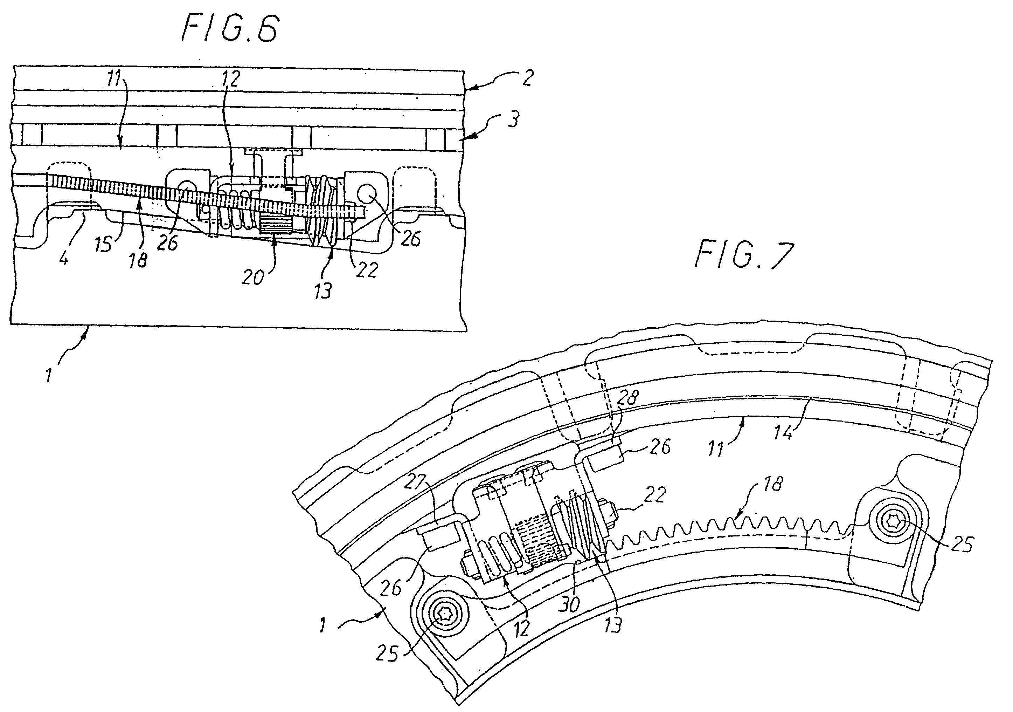

La denture 18, mieux visible sur les figures 6 et 7, est portée par une pièce en tôle pliée en forme générale de Z aplati et fixée par ses extrémités, à l'aide de vis 25, figure 1, sur des bossages du plateau de pression 1 ; ces extrémités sont transversalement disposées, par rapport à l'axe de l'embrayage, tandis que la partie inclinée qui les relie est parallèle aux rampes 15.

Le support 12, portant la roue à rochet 20, la vis sans fin 13 et le ressort hélicoïdal 40, est solidaire des moyens à rampes 11, par exemple par des vis 26 traversant des trous oblongs 27A, 28A ménagés dans ses bras 27, 28, lesdits trous oblongs 27A, 28A permettant un certain réglage axial lors de son installation ; dès lors, le diaphragme 3 se déplace par rapport au support 12 lors des opérations de débrayage et de ré-embrayage ; on comprendra que, grâce à cette disposition, lors du basculement du diaphragme 3 lors des opérations de ré-embrayage, celui-ci déplace la languette de commande 35 qui, par coopération avec les dents 21 de la roue à rochet 20, est amenée à faire tourner la roue à rochet 20 dans le sens horaire ; au retour, l'élasticité de l'organe élastique 31 et l'inclinaison des dents 21 font que la languette de commande 35 se déplace vers la droite par rapport aux figures 2 à 5 en montant sur les dents 21.

Le dispositif de rattrapage d'usure qui vient d'être décrit fonctionne comme suit.

La figure 2 représente l'embrayage engagé, les garnitures du disque de friction étant à l'êtat neuf ou compensé et serrées entre le plateau de réaction, non représenté, et le plateau de pression 1. Dans cette position, la languette de commande 35 a son extrémité au pied d'une dent de la roue à rochet 20.

Lorsque l'embrayage est débrayé, le diaphragme 3 bascule et, dans son déplacement, libère progressivement la languette de commande 35 dont l'extrémité suit la rampe inclinée constituée par la dent dans le pied de laquelle elle se trouvait dans l'étape précédente ; lors de cette course de débrayage, l'extrémité de la languette de commande 35 ne saute pas ou est à la limite de sauter une dent ; ceci est obtenu par la venue en butée de l'extrémité 33 de l'organe élastique 31 contre le support 12, plus précisément contre les faces 36A, tournées vers la roue à rochet 20, des flancs 36 d'une échancrure 37 ménagée dans l'âme 19 du support 12 qui constituent une butée de contrôle et limitent la course de retour de la languette de commande 35 quelle que soit celle du diaphragme 3, comme le montre la figure 3, l'extrémité 33 ayant la forme d'un T dont l'âme se débat dans l'échancrure 37 et dont la barre constitue la languette de commande 35.

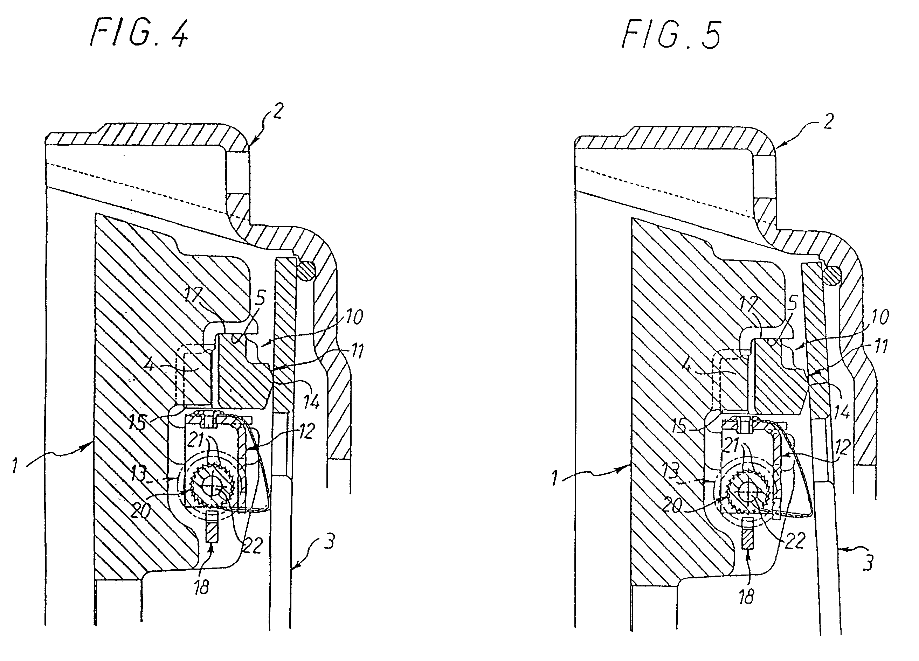

Lorsque les garnitures s'usent, comme on le sait le plateau de pression 1, toujours soumis à l'effort axial du diaphragme 3, se rapproche du plateau de réaction qui est fixe axialement comme le couvercle 2 ; le diaphragme 3 se rapproche donc du plateau de réaction, c'est-à-dire donc de l'extrémité ouverte du couvercle 2, en entraînant dans son mouvement la languette de commande 35 ; la roue à rochet 20 tourne autour de son axe dans le sens horaire ; l'embrayage engagé, garnitures usées, est représenté sur la figure 4. Cet entraînement en rotation de la roue à rochet 20 conduit la vis sans fin 13 à tourner également d'une petite quantité sur son axe ; les moyens de rampes 11 étant immobilisés par rapport au couvercle 3 sous l'effet de la charge du diaphragme 3, la vis sans fin 13 qui engrène avec la denture 18 se visse en quelque sorte sur cette denture 18 en comprimant le ressort hélicoïdal 40, le sens du filet de la vis sans fin 13 étant prévu en sorte qu'il en soit ainsi.

Lors de l'opération de débrayage qui suit la phase d'usure qui vient d'être décrite, le plateau de pression 1 libère les garnitures en s'éloignant d'elles sous l'action des languettes tangentielles 9 qui ramènent vers le fond du couvercle 2 le plateau de pression 1 ainsi que les moyens à rampes 11 en contact avec le diaphragme 3 par leurs zones d'appui 14 et avec les plots 4 du plateau de pression 1 par leurs rampes 15. Le ressort hélicoïdal 40 sollicite la vis sans fin 13 vers l'aile 24 du support 12, qu'elle a quittée en phases d'usure, c'est-à-dire de la droite vers la gauche par rapport aux figures 2 et 3 ; la charge du diaphragme 3 n'étant plus appliquée sur les moyens à rampes 11, le seul effort à vaincre pour pouvoir faire tourner ces moyens à rampes 11 par rapport au plateau de pression 1 est l'effort de frottement généré par l'effort de rappel des languettes tangentielles ; si la charge du ressort hélicoïdal 40 est suffisante pour vaincre cet effort, alors le ressort 40 prenant appui sur la vis sans fin 13, par l'intermédiaire ici de la roue à rochet 20, la vis sans fin 13 prenant appui sur la denture 18, fait tourner le support 12, donc les rampes 15 : en tournant sur elles-mêmes, les rampes 15 des moyens à rampes 11, par coopération avec les plots 4 du plateau de pression 1, éloigneront le plateau de pression 1 du fond du couvercle 2, augmentant ainsi la distance axiale entre la face de travail du plateau de pression 1 et les zones d'appui 14 des moyens à rampes 11, rattrapant ainsi au moins en partie le déplacement du plateau de pression 1 dû à l'usure des garnitures. La charge du ressort hélicoidal 40 étant fonction de la quantité donc il aura été comprimé par la vis sans fin 13 durant les phases d'usure, on voit que plusieurs opérations d'embrayage et de débrayage peuvent être nécessaires avant que le dispositif de rattrapage d'usure 10 n'entre en phase de rattrapage proprement dite, ceci étant fonction du dimensionnement relatif des pièces concernées, la charge du ressort hélicoïdal 40 étant amenée à croître avec l'usure des garnitures de friction ; sur la figure 5, qui correspond à l'embrayage débrayé garnitures usées, on a supposé qu'il n'y a pas eu de rattrapage ; on a supposé également que l'usure a été suffisante pour que la roue à rochet 20 ait suffisamment tourné de sorte qu'au retour la languette de commande 35 a sauté une dent.

Lors de l'opération d'embrayage, la languette de commande 35, poussée par le diaphragme 3, fait tourner la roue à rochet 20, et les moyens à rampes 11, non encore serrés par le diaphragme 3, tournent et rattrapent le jeu dû à l'usure ; en fin de l'opération de rattrapage, le diaphragme 3, la roue à rochet 20 et la languette de commande 35 retrouvent la position qu'ils occupaient à la figure 2.

Lorsqu'un embrayage est équipé d'un dispositif de rattrapage d'usure, dont le fonctionnement est automatique, il est intéressant pour l'usager d'avoir une idée du degré d'usure des garnitures de friction ; en effet sans cette information, il risque d'utiliser son disque de friction jusqu'à usure quasi complète des garnitures, situation pouvant conduire à des dégradations importantes des surfaces de friction du volant et/ou du plateau de pression dont le changement est une opération coûteuse.

Pour éviter d'atteindre cette situation, ici la longueur de la denture 18 avec laquelle coopère la vis sans fin 13 ne permet à celle-ci que d'opérer le rattrapage d'une usure correspondant à une partie seulement de l'épaisseur des garnitures, par exemple 80 pour cent de celle-ci ; en fin de denture, un embrèvement 30, visible sur les figures 1 et 7, permet à la vis sans fin 13 de se déconnecter, à ce stade, de la denture 18. Ainsi, la figure 1 montre les positions relatives de la vis sans fin 13 et de la denture 18 garnitures neuves, et la figure 7 ces positions alors que les garnitures ont été usées à 80 pour cent, par exemple.

La vis sans fin 13 n'agissant plus sur la denture 18, l'embrayage fonctionne comme un embrayage non équipé d'un dispositif de rattrapage d'usure : l'usure se poursuivant, la position du diaphragme évolue dans l'état embrayé de l'embrayage, avec l'usure, et donc sa charge et l'effort à fournir de débrayage qui, comme on le sait, croît avec l'usure ; dès lors, l'usager est averti et sait qu'il a franchi le cap des 80 pour cent d'usure.

Dans la variante qui vient d'être décrite, la vis sans fin 13 et la roue à rochet 21 sont d'une seule pièce ; bien entendu, la vis sans fin 13 pourrait être une pièce distincte et pourvue d'un alésage, ledit alésage et l'axe lui-même étant agencés de telle sorte que la vis sans fin peut coulisser le long de l'axe tout en étant solidaire en rotation dudit axe.

En se reportant aux figures 11 à 14, on voit un mécanisme d'embrayage à friction, notamment pour véhicule automobile, qui comprend un plateau de pression 51 destiné à coopérer avec un disque de friction non représenté, portant à sa périphérie externe des garnitures de friction, qui coopère lui-même avec un plateau de réaction. Le plateau de réaction, non représenté, est destiné à être calé en rotation sur un arbre menant, tel que le vilebrequin du moteur à combustion interne. Le disque de friction est solidaire en rotation d'un arbre mené tel que l'arbre d'entrée de la boîte de vitesses.

Le plateau de pression 51 est solidaire en rotation d'un couvercle 52 de forme creuse par l'intermédiaire de languettes tangentielles 9 qui, élastiques, constituent en même temps des moyens de rappel du plateau de pression 51 vers le couvercle 52.

Le plateau de pression 51, tout en étant solidaire en rotation du couvercle 52, est donc déplaçable axialement par rapport au couvercle 52 sous la sollicitation de moyens élastiques à action axiale commandés, ici un diaphragme 53 articulé sur le couvercle 52 grâce à des colonnettes 58 portant une couronne roulée offrant un appui secondaire au diaphragme 53, l'embrayage étant ici du type poussé, l'opération de débrayage étant effectuée en agissant sur l'extrémité des doigts du diaphragme dans le sens de la flèche F de la figure 13.

Pour maintenir, lorsque l'embrayage est embrayé, les moyens élastiques à action axiale 53 dans une position indépendante de l'usure des garnitures du disque de friction, et dans une moindre mesure l'usure des plateaux de pression 51 et de réaction dont les faces, dites de friction, s'usent au contact des garnitures du disque, il est prévu un dispositif de rattrapage d'usure qui comprend des moyens à rampes 54 disposées circonférentiellement ; plus précisément, ces moyens à rampes 54, sont constitués d'un anneau présentant des rampes 56 disposées circonférentiellement sur sa face tournée vers le plateau de pression 51 ; sur sa face opposée, ledit anneau présente la zone d'appui 14 constituée par une arête supérieure disposée en arc de cercle centré sur l'axe de l'embrayage. Bien entendu, ladite zone d'appui 14 peut être continue ou discontinue.

Le plateau de pression 51 présente, sur sa face tournée vers le fond du couvercle 52, une face d'appui 61 transversale avec laquelle coopère des moyens de contre-rampes 57 en forme d'anneau portant sur sa face opposée à celle qui coopère avec la face d'appui 61 des contre-rampes 55 réparties circonférentiellement à une distance l'une de l'autre qui correspond à celle qui sépare circonférentiellement deux rampes 56 successives, les contre-rampes 55 étant destinées à coopérer chacune avec une rampe 56.

Les moyens à rampes 54 sont placés axialement entre le diaphragme 53 et les moyens de contre-rampes 57 en sorte que les contre-rampes 55 reçoivent les rampes 56 et le diaphragme 53 coopère avec la zone d'appui 14 qui constitue ainsi les moyens d'appui par l'intermédiaire desquels le diaphragme 53 agit sur le plateau de pression 51.

La périphérie externe des moyens de contre-rampes 57 est munie d'une denture 59.

Ici, la denture 59 est réalisée à partir d'une tôle découpée et pliée, et rapportée par soudage sur les moyens de contre-rampes 57.

Le pied de la face d'appui 61 du plateau de pression 51 est bordée par un redent 68 cylindrique circonférentiel sur la périphérie externe duquel sont centrés les moyens de contre-rampes 57 et les moyens à rampes 54.

Le redent 68 présente une échancrure axiale 69 dans laquelle est susceptible de se débattre axialement une goupille 70 s'étendant radialement et portée par les moyens à rampes 54 : ainsi, ceux-ci sont empêchés de tourner par rapport au plateau de pression 51, donc par rapport aux moyens de contre-rampes 57, tout en pouvant se déplacer axialement.

Le dispositif de rattrapage d'usure comprend par ailleurs une roue à rochet 60 à dents inclinées 21 montée tournante autour d'un axe 67 qui porte également une vis sans fin 63 ; le filet et le pas de la vis sans fin 63 sont adaptés à la denture 59 des moyens de contre-rampes 57 ; la vis sans fin 63 est amenée à coopérer avec la denture 59 dans les conditions qui seront décrites ci-après ; ici, la denture 59 s'étend radialement par rapport à l'axe 67.

L'axe 67 est porté à rotation par un support 62 en tôle découpée et pliée, en forme générale de U ayant une âme 64 et deux ailes 65, 66 adaptées à supporter l'axe 67 ; le support 62 est fixé par son âme 64, par exemple par soudage, aux moyens à rampes 54, à la périphérie externe de ceux-ci, radialement au dessus de la zone d'appui 14.

Un organe élastique 72, ici métallique et de plus faible épaisseur que le support, en forme générale de L droit comprend deux ailes 75, 76 dont une aile 75 pour la fixation, par exemple par rivetage, de l'organe élastique 72 sur une patte 61 transversale du couvercle 52, et dont l'autre aile 76 est conformée en languette de commande et s'étend ici globalement parallèlement à l'axe de l'embrayage ; lorsque l'organe élastique 72 et la roue à rochet 60 sont montés, le premier sur le couvercle 52 et la seconde sur les moyens à rampes 54, la languette de commande 76 coopère élastiquement avec un pied de dent de la roue à rochet 60.

Autour de l'axe 67 est placé un ressort hélicoïdal 86 constituant le moyen élastique de rattrapage, comme décrit ci-dessous ; ici, le ressort 86 est placé axialement entre la roue à rochet 60 et l'aile 66 du support 62.

Le support 62 portant la roue à rochet 60, la vis sans fin 63 et le ressort hélicoïdal 86 étant solidaire des moyens à rampes 54, il se déplace par rapport au couvercle 52, donc par rapport à la languette de commande 76, lors des opérations de débrayage et de ré-embrayage ; on comprendra que, grâce à cette disposition, lors du basculement du diaphragme 53 lors des opérations de ré-embrayage, la roue à rochet 60 se déplace de la droite vers la gauche, par rapport à la figure 13, et, par coopération avec les dents 21 de la roue à rochet 60, l'extrémité de la languette de commande 76 est amenée à faire tourner la roue à rochet 60 dans le sens anti-horaire ; lors du débrayage, l'élasticité de l'organe élastique 72 et l'inclinaison des dents 21 font que la languette de commande 76 monte sur les dents 21.

Le dispositif de rattrapage d'usure qui vient d'être décrit fonctionne comme suit.

Les figures 11 et 14 représentent l'embrayage engagé, les garnitures du disque de friction étant à l'état neuf et serrées entre le plateau de réaction, non représenté, et le plateau de pression 51. Dans cette position, la languette de commande 76 a son extrémité au pied d'une dent de la roue à rochet 60.

Lorsque l'embrayage est débrayé, l'extrémité des doigts du diaphragme 53 est sollicitée dans le sens de la flèche F en éloignement du fond du couvercle 52 ; le diaphragme 53 bascule autour des colonnettes 58 ; dans son déplacement, la périphérie externe du diaphragme 53 libère progressivement le plateau de pression 51 qui entraîne la roue à rochet 60 vers le fond du couvercle 52, laquelle se déplace devant la languette de commande 76 dont l'extrémité suit la rampe inclinée constituée par la dent dans le pied de laquelle elle se trouvait dans l'étape précédante, les dents 21 de la roue à rochet 60 étant réalisées en sorte que, lors de cette course de débrayage garnitures neuves, l'extrémité de la languette de commande 76 ne saute pas une dent ; ceci est obtenu par la venue en butée d'une butée de contrôle 71 contre une contre-butée 73 du couvercle 52 ; ici, la butée de contrôle 71 est réalisée par une goupille portée par les moyens à rampes 54 et adaptée à coopérer en butée avec la face 73A, tournée vers le plateau de pression, d'une patte 73 du couvercle obtenue par découpe et pliage.

Lorsque les garnitures s'usent, comme on le sait le plateau de pression 51, toujours soumis à l'effort axial du diaphragme 53, se rapproche du plateau de réaction qui est fixe axialement comme le couvercle 52 ; la roue à rochet 60 se rapproche donc du plateau de réaction, en s'éloignant donc de la languette de commande 76 qui retient la dent 21 avec laquelle elle coopère en fond de dent ; la roue à rochet 60 tourne donc autour de son axe dans le sens anti-horaire ; cet entraînement en rotation de la roue à rochet 60 conduit la vis sans fin 63 à tourner également sur son axe ; les moyens de contre-rampes 57 étant immobilisés en rotation sous l'effet de la charge du diaphragme 53, la vis sans fin 63 qui engrène avec la denture 59 des moyens de contre-rampes 57 se visse en quelque sorte sur cette denture 59 en comprimant le ressort hélicoïdal 86, le sens du filet de la vis sans fin 63 étant prévu en sorte qu'il en soit ainsi.

Lors de l'opération de débrayage qui suit la phase d'usure qui vient d'être décrite, le plateau de pression 51 libère les garnitures en s'éloignant d'elles sous l'action des languettes tangentielles 9 qui ramènent vers le fond du couvercle 52 le plateau de pression 51 ainsi que les moyens à rampes 54 en contact avec le diaphragme 53 par leurs zones d'appui 14 et avec les contre-rampes 55 par leurs rampes 56. Le ressort hélicoïdal 86 sollicite la vis sans fin 63 vers l'aile 65 du support 62, dont elle s'est éloignée en phases d'usure, c'est-à-dire de la droite vers la gauche par rapport aux figures 9 et 10 ; la charge du diaphragme 53 n'étant plus appliquée sur les moyens à rampes 54, le seul effort à vaincre pour pouvoir faire tourner les moyens de contre-rampes 55 par rapport au plateau de pression 51 est l'effort de rappel des languettes tangentielles 9 ; si la charge du ressort hélicoïdal 86 est suffisante pour vaincre cet effort, alors le ressort 86 déplace la vis sans fin 63 qui est empêchée de tourner sur elle-même par la pression de la languette de commande 76 et qui entraînera la denture 59 : en tournant sur elles-mêmes, les contre-rampes 55, par coopération avec les rampes 56 fixes relativement, éloigneront le plateau de pression 51 du fond du couvercle 52, augmentant ainsi la distance axiale entre la face de travail du plateau de pression 51 et les zones d'appui 4 des moyens à rampes 54, rattrapant ainsi au moins en partie le jeu dû à l'usure des garnitures. La charge du ressort hélicoïdal 86 étant fonction de la quantité dont il aura été comprimé par la vis sans fin 63 durant les phases d'usure, on voit que plusieurs opérations d'embrayage et de débrayage peuvent être nécessaires avant que le dispositif de rattrapage de jeu n'entre en phase de rattrapage proprement dite, ceci étant fonction du dimensionnement relatif des pièces concernées.

Si l'usure a été suffisante pour que la roue à rochet 60 ait tourné suffisamment pour qu'au retour la languette de commande 76 saute une dent, lors de l'opération d'embrayage, la languette de commande 76 fait tourner la roue à rochet 60 et les moyens de contre-rampes 57, non encore serrés par le diaphragme 53, tournent et rattrapent l'usure ; en fin d'opération de rattrapage, le diaphragme 53, la roue à rochet 60, et la languette de commande 76 retrouvent leur position qu'ils occupaient à la figure 11.

La vis sans fin 63 et la roue à rochet 60 étant taillées dans une même pièce, comme on le voit, le support 62 équipé de cette même pièce, du ressort 86, de l'axe 67, et les moyens à rampes 54 constituent un sous-ensemble prêt à être installé.

## Revendications

1. Embrayage à friction du genre comportant un plateau de réaction (102), un disque de friction (100), portant à sa périphérie externe des garnitures de friction (101), un plateau de pression (1, 51), un couvercle (2, 52) fixé sur le plateau de réaction, des moyens élastiques à action axiale (3, 53) agissant entre, d'une part, le couvercle (2, 52) et, d'autre part, le plateau de pression (1, 51) par l'intermédiaire de moyens d'appui (14), le plateau de pression (1, 51) étant solidaire en rotation du couvercle (2, 52) tout en pouvant se déplacer axialement par rapport à lui et étant soumis à l'action de moyens élastiques de rappel (9) rappelant le plateau de pression (1, 51) axialement vers le couvercle (2, 52), ledit embrayage comportant également un dispositif de rattrapage d'usure comprenant des moyens à rampes (11, 54) disposées circonférentiellement, placés axialement entre les moyens d'appui (14) et le plateau de pression (1, 51), lesdites rampes (15, 56) étant adaptées à coopérer avec des moyens de contre-rampes (4, 57), ledit dispositif de rattrapage d'usure comprenant également une denture (18, 59) avec laquelle coopère une vis sans fin (13, 63) disposée tangentiellement, l'un des deux organes moyens à rampes (11, 54) et moyens de contre-rampes (4, 57) étant solidaire de ladite denture (18, 59), des moyens d'entraînement en rotation (20, 60) de la vis sans fin (13, 63) étant prévus, rendus opérationnels par l'usure des garnitures de friction lorsque l'embrayage est embrayé, la vis sans fin (13, 63) et les moyens d'entraînement en rotation (20, 60) de la vis sans fin (13, 63) étant portés par un support (12, 62), **caractérisé par le fait que** ledit support (12, 62) est solidaire des moyens à rampes (11, 54).

2. Embrayage à friction selon la revendication 1, **caractérisé par le fait que** les moyens élastiques à action axiale (3, 53) sont constitués par un diaphragme.

3. Embrayage à friction selon la revendication 1, **caractérisé par le fait que** les moyens à rampes (11, 54) sont constitués d'un anneau présentant axialement, d'un côté des rampes (15, 56) inclinées et réparties circonférentiellement et, de l'autre côté, les moyens d'appui (14).

4. Embrayage à friction selon la revendication 3, **caractérisé par le fait que** les moyens de contre-rampes consistent en des plots (4) ou des rampes (57) destinés à coopérer avec les rampes (15, 56) des moyens à rampes (11, 54).

5. Embrayage à friction selon la revendication 1, **caractérisé par le fait que** les moyens à rampes (11, 54) sont centrés par rapport au plateau de pression (1, 51).

6. Embrayage à friction selon la revendication 1, **caractérisé par le fait que** la vis sans fin (13, 63) est montée déplaçable selon son axe en étant soumise à l'action d'un moyen élastique dit de rattrapage (40, 86).

7. Embrayage à friction selon la revendication 6, **caractérisé par le fait que** la course du plateau de pression (51) est limitée dans le sens du débrayage.

8. Embrayage à friction selon l'une des revendications 1 à 7, **caractérisé par le fait que** le moyen élastique de rattrapage (40, 86) est un ressort hélicoïdal entourant un axe (22, 67) qui porte la vis sans fin (13, 63).

9. Embrayage à friction selon la revendication 8, **caractérisé par le fait que** les moyens d'entraînement en rotation (20, 60) de la vis sans fin (13, 63) sont constitués par une roue à rochet solidaire en rotation de la vis sans fin (13, 63).

10. Embrayage à friction selon la revendication 9, **caractérisé par le fait que** l'axe (22, 67) portant la vis sans fin (13, 63) et le ressort hélicoïdal (40, 86) est supporté par le support (12, 62).

11. Embrayage à friction selon la revendication 1, **caractérisé par le fait que** les moyens d'entraînement en rotation (20, 60), de la vis sans fin (13, 63), sont commandés par l'intermédiaire d'une languette de commande (35, 76).

12. Embrayage à friction selon la revendication 11, **caractérisé par le fait que** la course de la languette de commande (35, 76),par rapport à la roue à rochet (20, 60), lors de l'opération de débrayage, est limitée par une butée dite de contrôle (36A).

13. Embrayage à friction selon la revendication 12, **caractérisé par le fait que** la vis sans fin (13, 63) et la roue à rochet (20, 60) sont taillées dans une même pièce.

14. Embrayage à friction selon la revendication 13, **caractérisé par le fait que** les dents (21) de la roue à rochet (20, 60) sont réalisées en sorte que, lors d'une course de débrayage minimum définie par construction, et abstraction faite de la butée de contrôle (36, 73), l'extrémité de la languette de commande (35, 76) saute une dent.

15. Embrayage à friction selon la revendication 14, **caractérisé par le fait que** les dents (21) de la roue à rochet (20, 60) sont réalisées en sorte que, lors de la course de débrayage garnitures neuves, l'extrémité de la languette de commande (35, 76) ne saute pas ou est à la limite de sauter une dent.

16. Embrayage à friction selon la revendication 1, **caractérisé par le fait que** les moyens de contre-rampes (4) et la denture (18) sont solidaires du plateau de pression (1), les moyens à rampes (11) étant libres en rotation.

17. Embrayage à friction selon la revendication 16, **caractérisé par le fait que** le support (12), portant la vis sans fin (13) et les moyens d'entraînement en rotation (20) de la vis sans fin (13), est fixé aux moyens à rampes (11) radialement en dessous de ceux-ci.

18. Embrayage à friction selon la revendication 16, **caractérisé par le fait que** la denture (18) est placée radialement en dessous de la vis sans fin (13) avec laquelle elle coopère.

19. Embrayage à friction selon la revendication 16, **caractérisé par le fait que** la languette de commande (35) est portée par le support (12).

20. Embrayage à friction selon la revendication 16, **caractérisé par le fait que** les moyens d'entraînement en rotation (20) de la vis sans fin (13) sont commandés par le diaphragme (3).

21. Embrayage à friction selon la revendication 20, **caractérisé par le fait que** le support (12) équipé de la vis sans fin (13), de la roue à rochet (20), de la languette de commande (35), du ressort (40) et de l'axe (22) constitue un sous-ensemble prêt à être installé.

22. Embrayage à friction selon la revendication 1, **caractérisé par le fait que** les moyens à rampes (54) sont solidaires en rotation du plateau de pression (52) tout en pouvant se déplacer axialement par rapport à lui, tandis que les moyens de contre-rampes (57) sont réalisés sous forme d'un anneau disposé axialement entre celui-ci et les moyens à rampes (54).

23. Embrayage à friction selon la revendication 22, **caractérisé par le fait que** ledit anneau est monté libre en rotation par rapport au plateau de pression (52).

24. Embrayage à friction selon la revendications 23, **caractérisé par le fait que** la denture (59) est portée par les moyens de contre-rampes (57).

25. Embrayage à friction selon la revendication 24, **caractérisé par le fait que** le support (62) portant la vis sans fin (63) et les moyens d'entraînement en rotation (60) de la vis sans fin (63), est fixé aux moyens à rampes (54) radialement au dessus de ceux-ci.

26. Embrayage à friction selon la revendication 24, **caractérisé par le fait que** la denture (59) est placée radialement au dessus des moyens de contre-rampes (57).

27. Embrayage à friction selon la revendication 24, **caractérisé par le fait que** la languette de commande (76) est portée par le couvercle (52) et **par le fait que** le support (62) équipé de la vis sans fin (63), de la roue à rochet (60), du ressort (86) et de l'axe (67) constitue un sous-ensemble prêt à être installé.

28. Embrayage à friction selon la revendication 24, **caractérisé par le fait que** l'embrayage est du type poussé, le diaphragme (53) étant solidarisé au couvercle par des colonnettes (58).

## Patentansprüche

1. Reibungskupplung, umfassend eine Gegenanpreßplatte (102), eine Kupplungsscheibe (100), die an ihrem äußeren Umfang Reibbeläge (101) trägt, eine Druckplatte (1, 51), einen an der Gegenanpreßplatte befestigten Deckel (2, 52), axial wirksame elastische Mittel (3, 53), die zwischen dem Deckel (2, 52) einerseits und der Druckplatte (1, 51) andererseits über Auflagemittel (14) wirken, wobei die Druckplatte (1, 51) drehfest mit dem Deckel (2, 52) verbunden ist, während sie sich axial im Verhältnis zu diesem verschieben kann, und der Wirkung von elastischen Rückstellmitteln (9) ausgesetzt ist, die die Druckplatte (1, 51) axial zum Deckel (2, 52) hin zurückstellen, und wobei die besagte Kupplung außerdem eine Verschleißnachstelleinrichtung umfaßt, die Rampenmittel (11, 54) mit umfangsmäßig angeordneten Rampen enthält, die axial zwischen den Auflagemitteln (14) und der Druckplatte (1, 51) angebracht sind, wobei die besagten Rampen (15, 56) mit Gegenrampenmitteln (4, 57) zusammenwirken können, wobei die besagte Verschleißnachstelleinrichtung außerdem eine Zahnung (18, 59) umfaßt, mit der eine tangential angeordnete Schnecke (13, 63) zusammenwirkt, wobei eines der beiden Organe Rampenmittel (11, 54) und Gegenrampenmittel (4, 57) fest mit der besagten Zahnung (18, 59) verbunden ist, wobei Drehantriebsmittel (20, 60) für die Schnecke (13, 63) vorgesehen sind, die durch den Verschleiß der Reibbeläge bei eingerückter Kupplung betriebsbereit werden, wobei die Schnecke (13, 63) und die Drehantriebsmittel (20, 60) der Schnecke (13, 63) auf einem Träger (12, 62) gelagert sind,
**dadurch gekennzeichnet, daß** der besagte Träger (12, 62) fest mit den Rampenmitteln (11, 54) verbunden ist.

2. Reibungskupplung nach Anspruch 1, **dadurch gekennzeichnet, daß** die axial wirksamen elastischen Mittel (3, 53) aus einer Membranfeder bestehen.

3. Reibungskupplung nach Anspruch 1, **dadurch gekennzeichnet, daß** die Rampenmittel (11, 54) durch einen Ring gebildet werden, der axial auf einer Seite geneigte und umfangsmäßig verteilte Rampen (15, 56) und auf der anderen Seite die Auflagemittel (14) aufweist.

4. Reibungskupplung nach Anspruch 3, **dadurch gekennzeichnet, daß** die Gegenrampenmittel aus Sockeln (4) oder Rampen (57) bestehen, die für das Zusammenwirken mit den Rampen (15, 56) der Rampenmittel (11, 54) bestimmt sind.

5. Reibungskupplung nach Anspruch 1, **dadurch gekennzeichnet, daß** die Rampenmittel (11, 54) im Verhältnis zur Druckplatte (1, 51) zentriert sind.

6. Reibungskupplung nach Anspruch 1, **dadurch gekennzeichnet, daß** die Schnecke (13, 63) entlang ihrer Achse verschiebbar gelagert ist, wobei sie der Wirkung eines sogenannten elastischen Nachstellmittels (40, 86) ausgesetzt ist.

7. Reibungskupplung nach Anspruch 6, **dadurch gekennzeichnet, daß** der Verstellweg der Druckplatte (51) in der Ausrückrichtung begrenzt ist.

8. Reibungskupplung nach einem der Ansprüche 1 bis 7, **dadurch gekennzeichnet, daß** das elastische Rückstellmittel (40, 86) eine Schraubenfeder ist, die eine Achse (22, 67) umgibt, die die Schnecke (13, 63) trägt.

9. Reibungskupplung nach Anspruch 8, **dadurch gekennzeichnet, daß** die Drehantriebsmittel (20, 60) der Schnecke (13, 63) aus einem Sperrzahnrad bestehen, das drehfest mit der Schnecke (13, 63) verbunden ist.

10. Reibungskupplung nach Anspruch 9, **dadurch gekennzeichnet, daß** die Achse (22, 67), die die Schnecke (13, 63) und die Schraubenfeder (40, 86) trägt, am Träger (12, 62) gelagert ist.

11. Reibungskupplung, nach Anspruch 1, **dadurch gekennzeichnet, daß** die Drehantriebsmittel (20, 60) der Schnecke (13, 63) über eine Betätigungszunge (35, 76) betätigt werden.

12. Reibungskupplung nach Anspruch 11, **dadurch gekennzeichnet, daß** der Verstellweg der Betätigungszunge (35, 76) im Verhältnis zum Sperrzahnrad (20, 60) beim Ausrückvorgang durch einen sogenannten Kontrollanschlag (36A) begrenzt ist.

13. Reibungskupplung nach Anspruch 12, **dadurch gekennzeichnet, daß** die Schnecke (13, 63) und das Sperrzahnrad (20, 60) aus einem gleichen Teil herausgearbeitet sind.

14. Reibungskupplung nach Anspruch 13, **dadurch gekennzeichnet, daß** die Zähne (21) des Sperrzahnrads (20, 60) so ausgeführt sind, daß bei einem konstruktionsmäßig definierten minimalen Ausrückweg und unter Absehung vom Kontrollanschlag (36, 73) das Ende der Betätigungszunge (35, 76) einen Zahn überspringt.

15. Reibungskupplung nach Anspruch 14, **dadurch gekennzeichnet, daß** die Zähne (21) des Sperrzahnrads (20, 60) so angeordnet sind, daß beim Ausrückweg mit neuen Reibbelägen das Ende der Betätigungszunge (35, 76) nicht einen Zahn überspringt oder an der Grenze ist, einen Zahn zu überspringen.

16. Reibungskupplung nach Anspruch 1, **dadurch gekennzeichnet, daß** die Gegenrampenmittel (4) und die Zahnung (18) fest mit der Druckplatte (1) verbunden sind, wobei die Rampenmittel (11) frei drehbar sind.

17. Reibungskupplung nach Anspruch 16, **dadurch gekennzeichnet, daß** der Träger (12), der die Schnecke (13) und die Drehantriebsmittel (20) der Schnecke (13) trägt, an den Rampenmitteln (11) radial innerhalb dieser Mittel befestigt ist.

18. Reibungskupplung nach Anspruch 16, **dadurch gekennzeichnet, daß** die Zahnung (18) radial innerhalb der Schnecke (13) angebracht ist, mit der sie zusammenwirkt.

19. Reibungskupplung nach Anspruch 16, **dadurch gekennzeichnet, daß** die Betätigungszunge (35) am Träger (12) gelagert ist.

20. Reibungskupplung nach Anspruch 16, **dadurch gekennzeichnet, daß** die Drehantriebsmittel (20) der Schnecke (13) durch die Membranfeder (3) betätigt werden.

21. Reibungskupplung nach Anspruch 20, **dadurch gekennzeichnet, daß** der mit der Schnecke (13), dem Sperrzahnrad (20), der Betätigungszunge (35), der Feder (40) und der Achse (22) versehene Träger (12) eine einbaufertige Untergruppe bildet.

22. Reibungskupplung nach Anspruch 1, **dadurch gekennzeichnet, daß** die Rampenmittel (54) drehfest mit der Druckplatte (51) verbunden sind, wobei sie sich axial im Verhältnis zu ihr verschieben können, während die Gegenrampenmittel (57) in Form eines Rings ausgeführt sind, der axial zwischen dieser und den Rampenmitteln (54) angeordnet ist.

23. Reibungskupplung nach Anspruch 22, **dadurch gekennzeichnet, daß** der besagte Ring frei drehbar im Verhältnis zur Druckplatte (51) gelagert ist.

24. Reibungskupplung nach Anspruch 23, **dadurch gekennzeichnet, daß** die Zahnung (59) an den Gegenrampenmitteln (57) angebracht ist.

25. Reibungskupplung nach Anspruch 24, **dadurch gekennzeichnet, daß** der Träger (62), der die Schnecke (63) und die Drehantriebsmittel (60) der Schnecke (63) trägt, an den Rampenmitteln (54) radial außerhalb dieser Mittel befestigt ist.

26. Reibungskupplung nach Anspruch 24, **dadurch gekennzeichnet, daß** die Zahnung (59) radial außerhalb der Gegenrampenmittel (57) angebracht ist.

27. Reibungskupplung nach Anspruch 24, **dadurch gekennzeichnet, daß** die Betätigungszunge (76) am Deckel (52) angebracht ist und daß der mit der Schnecke (63), dem Sperrzahnrad (60), der Feder (86) und der Achse (67) versehene Träger (62) eine einbaufertige Untergruppe bildet.

28. Reibungskupplung nach Anspruch 24, **dadurch gekennzeichnet, daß** die Kupplung in gedrückter Konstruktion ausgeführt ist, wobei die Membranfeder (53) durch Distanzbolzen (58) fest mit dem Deckel verbunden ist.

## Claims

1. A friction clutch of the kind comprising a reaction plate (102), a friction disc (100) carrying friction liners (101) at its periphery, a pressure plate (1, 51), a cover plate (2, 52) fixed on the reaction plate, axially acting resilient means (3, 53) acting between the cover plate (2, 52) on the one hand and the pressure plate (1, 51) on the other hand through interposed abutment means (14), the pressure plate (1, 51) being coupled in rotation to the cover plate (2, 52) while being displaceable axially with respect thereto and being subject to the action of resilient return means (9) for biasing the pressure plate (1, 51) towards the cover plate (2, 52), the said clutch further comprising a wear take-up device including circumferentially disposed ramp means (11, 54) which are located axially between the abutment means (14) and the pressure plate (1, 51), the ramps (15, 56) of the said ramp means being adapted to cooperate with counter-ramp means (4, 57), the said wear take-up device further including a set of teeth (18, 59) with which a tangentially disposed worm (13, 63) is in cooperation, one of the two features consisting of the ramp means (11, 54) and the counter-ramp means (4, 57) being fixed with respect to the said set of teeth (18, 59), means (20, 60) being provided for driving the worm (13, 63) in rotation and being activated by wear in the friction liners when the clutch is engaged, the worm (13, 63) and the rotational driving means (20, 60) for the worm (13, 63) being carried by a support (12, 62), **characterised by** the fact that the said support (12, 62) is fixed with respect to the ramp means (11, 54).

2. A friction clutch according to Claim 1,
**characterised by** the fact that the axially acting resilient means (3, 53) consist of a diaphragm.

3. A friction clutch according to Claim 11,
**characterised by** the fact that the ramp means (11, 54) consist of an annular ring having, axially, on one side inclined ramps (15, 56) spaced circumferentially apart, and on the other side the abutment means (14).

4. A friction clutch according to Claim 3,
**characterised by** the fact that the counter-ramp means consist of pads (4) or ramps (57) adapted to cooperate with the ramps (15, 56) of the ramp means (11, 54).

5. A friction clutch according to Claim 1,
**characterised by** the fact that the ramp means (11, 54) are centred with respect to the pressure plate (1, 51).

6. A friction clutch according to Claim 1,
**characterised by** the fact that the worm (13, 63) is mounted so as to be displaceable along its axis by the action of a so-called resilient take-up means (40, 86).

7. A friction clutch according to Claim 6,
**characterised by** the fact that the travel of the pressure plate (51) is limited in the declutching direction.

8. A friction clutch according to one of Claims 1 to 7, **characterised by** the fact that the resilient take-up means (40, 86) is a helical spring surrounding a spindle (22, 67) which carries the worm (13, 63).

9. A friction clutch according to Claim 8,
**characterised by** the fact that the rotational driving means (20, 60) for the worm (13, 63) consist of a ratchet wheel coupled in rotation to the worm (13, 63).

10. A friction clutch according to Claim 9,
**characterised by** the fact that the spindle (22, 67) that carries the worm (13, 63) and helical spring (40, 86) is supported by the support (12, 62).

11. A friction clutch according to Claim 1,
**characterised by** the fact that the rotational driving means (20, 60) for the worm (13, 63) are controlled through a control tongue (35, 76).

12. A friction clutch according-to Claim 11,
**characterised by** the fact that the travel of the control tongue (35, 76) with respect to the ratchet wheel (20, 60) is limited during the declutching operation by a so-called control end stop (36A).

13. A friction clutch according to Claim 12,
**characterised by** the fact that the worm (13, 63) and the ratchet wheel (20, 60) together constitute a single piece.

14. A friction clutch according to Claim 13,
**characterised by** the fact that the teeth (21) of the ratchet wheel (20, 60) are such that, over a minimum course of declutching travel defined by construction and excluding the control end stop (36, 73), the end of the control tongue (35, 76) jumps one tooth.

15. A friction clutch according to Claim 14,
**characterised by** the fact that the teeth (21) of the ratchet wheel (20, 60) are such that, over the course of declutching travel with new liners, the end of the control tongue (35, 76) does not jump, or is at the limit for jumping, a tooth.

16. A friction clutch according to Claim 1,
**characterised by** the fact that the counter-ramp means (4) and the set of teeth (18) are fixed with respect to the pressure plate (1), the ramp means (11) being freely rotatable.

17. A friction clutch according to Claim 16,
**characterised by** the fact that the support (12), carrying the worm (13) and the rotational driving means (20) for the worm (13), is fixed to the ramp means (11) radially inwards of the latter.

18. A friction clutch according to Claim 16,
**characterised by** the fact that the set of teeth (18) is located radially inwardly of the worm (13) with which it is in cooperation.

19. A friction clutch according to Claim 16,
**characterised by** the fact that the control tongue (35) is carried by the support (12).

20. A friction clutch according to Claim 16,
**characterised by** the fact that the rotational driving means (20) for the worm (13) are controlled by the diaphragm (3).

21. A friction clutch according to Claim 20,
**characterised by** the fact that the support (12), equipped with the worm (13), the ratchet wheel (20), the control tongue (35), the spring (40) and the spindle (22), constitutes a sub-assembly ready to be installed.

22. A friction clutch according to Claim 1,
**characterised by** the fact that the ramp means (54) are coupled in rotation to the pressure plate (52) while being displaceable axially with respect to it, and the counter-ramp means (57) are made in the form of an annular ring disposed axially between the latter and the ramp means (54).

23. A friction clutch according to Claim 22,
**characterised by** the fact that the said annular ring is mounted for free rotation with respect to the pressure plate (52).

24. A friction clutch according to Claim 23,
**characterised by** the fact that the set of teeth (59) is carried by the counter-ramp means (57).

25. A friction clutch according to Claim 24,
**characterised by** the fact that the support (62), carrying the worm (63) and the rotational driving means (60) for the worm (63), is fixed to the ramp means (54) radially outwardly of the latter.

26. A friction clutch according to Claim 24,
**characterised by** the fact that the set of teeth (59) is located radially outwardly of the counter-ramp means (57).

27. A friction clutch according to Claim 24,
**characterised by** the fact that the control tongue (76) is carried by the cover plate (52), and by the fact that the support (62), equipped with the worm (63), the ratchet wheel (60), the spring (86) and the spindle (67), constitutes a sub-assembly ready to be installed.

28. A friction clutch according to Claim 24,
**characterised by** the fact that the clutch is of the push-to-release type, the diaphragm (53) being fixed to the cover plate by means of spigots (58).
